(19) Europäisches Patentamt
European Patent Office
Office européen des brevets

(11) Veröffentlichungsnummer : **0 121 090**
**B1**

(12) # EUROPÄISCHE PATENTSCHRIFT

(45) Veröffentlichungstag der Patentschrift : **09.09.87**

(51) Int. Cl.⁴ : **B 01 D 29/32**

(21) Anmeldenummer : **84102025.8**

(22) Anmeldetag : **27.02.84**

(54) **Rückspülbares Filtergerät.**

(30) Priorität : **07.03.83 DE 3308020**

(43) Veröffentlichungstag der Anmeldung : **10.10.84 Patentblatt 84/41**

(45) Bekanntmachung des Hinweises auf die Patenterteilung : **09.09.87 Patentblatt 87/37**

(84) Benannte Vertragsstaaten : **AT BE CH DE FR GB IT LI LU NL SE**

(56) Entgegenhaltungen :
**GB-A- 413 677**
**US-A- 2 125 532**
**US-A- 4 156 651**

(73) Patentinhaber : **CILLICHEMIE Ernst Vogelmann GmbH & Co.**
**Bottwarbahnstrasse 70**
**D-7100 Heilbronn (DE)**

(72) Erfinder : **Weller, Horst**
**Lerchenstrasse 19**
**D-7107 Neckarsulm (DE)**

(74) Vertreter : **Patentanwälte Dr. Ing. Eugen Maier Dr. Ing. Eckhard Wolf**
**Pischekstrasse 19**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 121 090 B1**

Jouve, 18, rue St-Denis, 75001 Paris, France

**Beschreibung**

Die Erfindung betrifft ein Filtergerät mit rückspülbarem Filterelement für Flüssigkeiten, insbesondere für den Anschluß an Wasserleitungen.

Filtergeräte dieser Art sollen verhindern, daß von der Flüssigkeit mitgeführte Verunreinigungen, wie Sand, Hanf, Eisenspäne, Rostteilchen u. dgl. zu den nachgeordneten Armaturen, Verbrauchern und Geräten gelangen und dort zu Störungen und Beschädigungen führen können. Die Verunreinigungen setzen sich auf der Rohflüssigkeitsseite des Filterelements ab. Mit zunehmender Verschmutzung des Filterelements erhöht sich der Druckabfall im Gerät. Deshalb muß das Filterelement von Zeit zu Zeit durch Umkehrung der Strömung gereinigt werden. Auf Grund der Strömungsumkehr wird der an der rohflüssigkeitsseitigen Oberfläche anhaftende Schmutz abgelöst und über einen während des Rückspülvorgangs offenen Rückspülkanal ausgeschwemmt. Zur Erzielung eines guten Reinigungseffekts ist eine möglichst hohe Strömungsgeschwindigkeit der Rückspülflüssigkeit durch das Filterelement erforderlich. Andererseits sollte der für den Rückspülvorgang notwendige Flüssigkeitsverbrauch klein gehalten werden können.

Es ist bereits ein Filtergerät dieser Art vorgeschlagen worden (EP-A-0 120 988. Priorität : 05. 03.83 ; Anmeldetag : 13.08.83 ; Veröffentlichungstag : 10.10.84), bei welchem innerhalb des Filterelements ein mit mindestens einer schlitzförmigen Ringöffnung axial über die rohflüssigkeitsseitige Oberfläche des Filterelements verschiebbares, austrittsseitig zur Rückspülkammer führendes Kanalstück vorgesehen ist. Die Ringöffnung ist dabei am radial äußersten Rand des Abstreifers angeordnet, während das Filterelement in dem vom Abstreifer überstrichenen rohflüssigkeitsseitigen Bereich eine im wesentlichen glatte Oberfläche aufweist. Das Kanalstück trägt an seinem unteren, in die Rückspülkammer eingreifenden Ende einen Schließkörper, der gegen einen Dichtsitz im Bereich der Auslaßöffnung andrückbar und beim axialen Verschieben des Kanalstücks unter Freigabe der Auslaßöffnung von diesem abhebbar ist. Ferner ist das Kanalstück mit einem Hohlkolben verbunden, der in einen über ein Steuerventil wahlweise mit dem Überdruck aus einer der Flüssigkeitskammern oder mit Atmosphärendruck beaufschlagbaren Steuerzylinder eingreift. Steuerzylinder und Hohlkolben befinden sich innerhalb des Rohrwasserbereichs auf der Höhe des Filterelements. Das Innere des Hohlkolbens und des Steuerzylinders ist gegenüber der Rohwasserkammer lediglich durch einen O-Ring zwischen Kolbenaußenwand und Zylinderinnenwand abgedichtet. Es besteht daher die Gefahr, daß bereits geringe Schmutz- und Kalkablagerungen zu Funktionsstörungen führen. Dies gilt umso mehr, als eine weitgehend reibungsfreie Führung des Steuerkolbens im Steuerzylinder erwünscht ist, die nur auf Kosten der Dichtungskräfte realisierbar ist. Um die Reibung auch im Anlagenbereich zwischen Kanalstück und Filterelement weitestgehend herabzusetzen, besteht das Filterelement aus einem im wesentlichen hohlzylindrischen Stützkörper und einem über die Innenfläche des Stützkörpers gespannten Filterstrumpf. Die als Widerlager für den Filterstumpf dienende Stützrippe des Stützkörpers ist schraubenförmig ausgebildet, so daß der Abstreifer über die gesamte axiale Verschiebestrecke mit annähernd gleichbleibendem Druck und damit gleichbleibender Gleitreibung gegen den Filterstrumpf und den Stützkörper anliegen. Eine solche Konstruktion eignet sich besonders für kleine Nennweiten, da der als Kunststoff-Spritzteil ausgebildete Stützkörper sonst zu große Abmessungen erfordern würde.

Der Erfindung liegt demgegenüber die Aufgabe zugrunde, ein rückspülbares Filtergerät zu schaffen, das auch bei großen Nennweiten einen reibungsarmen und trotzdem zuverlässigen Rückspülbetrieb gewährleistet. Zur Lösung dieser Aufgabe werden die in den Patentansprüchen 1 und/oder 6 angegebenen Merkmalskombinationen vorgeschlagen. Weitere vorteilhafte Ausgestaltungen und Weiterbildungen der Erfindung ergeben sich aus den Unteransprüchen.

Mit der erfindungsgemäßen Ringöffnung, die am radial äußersten Rand eines am Kanalstück befindlichen Abstreifers angeordnet ist, wird erreicht, daß die im wesentlichen glatt ausgebildete rohwasserseitige Oberfläche des Filterelements während des Rückspülvorgangs sowohl von groben Ablagerungen durch den vorbeistreichenden Abstreifer befreit, als auch von dem von der Reinwasserseite durch das Filterelement zur Ringöffnung strömenden Rückspülwasser gereinigt wird, ohne daß unerwünschtes Rohwasser aus der Rohwasserkammer in die Ringöffnung gelangen kann. Das öffnen und Schließen der Auslaßöffnung für das Rückspülwasser erfolgt automatisch beim Auslösen eines Rückspülvorgangs, da der Schließkörper für die Auslaßöffnung unmittelbar am unteren Ende des Kanalstücks angeordnet und zusammen mit diesem unter Freigabe der Auslaßöffnung verschiebbar ist. Auf der anderen Seite ist das Kanalstück über einen Stößel starr mit einem Kolben verbunden, der in einem außerhalb des Filterelements vom wasserdurchströmten Bereich getrennt angeordneten, über ein Steuerventil wahlweise mit dem Überdruck aus einer der Flüssigkeitskammern oder mit Atmosphärendruck beaufschlagbaren Steuerzylinder angeordnet ist. Die Kolbenfläche ist dabei mit einer flüssigkeitsdicht an der Zylinderwand befestigten Rollmembran überspannt. Der Steuerungsteil ist somit vollständig aus dem Strömungsverlauf innerhalb des Filtergeräts ausgelagert, so daß die Gefahr von Schmutz- und Kalkablagerungen, die zu Funktionsstörungen führen könnten, weitgehend vermieden und eine wartungsfreundliche Anordnung gewährleistet ist.

Da bei großen Flüssigkeitsdurchsätzen am Filterelement erhebliche Kräfte angreifen, die das Filterelement zur Reinwasserseite hin durchbiegen könnten, wird gemäß einer Variante der Erfindung (Merkmalskombination gemäß Anspruch 6) vorgeschlagen, daß das Filterelement einen zylindrischen Tragkäfig, ein den Tragkäfig rohflüssigkeitsseitig überspannendes biegeschlaffes Filtergewebe und ein zwischen Tragkäfig und Filtergewebe angeordnetes biegesteifes Stützgitter aufweist, wobei die Maschenweite des Stützgitters um ein Mehrfaches kleiner als die des Tragkäfigs und um ein Mehrfaches größer als die des Filtergewebes ist, so daß das Filtergewebe auf dem Stützgitter flach aufliegen kann. Die axiale Weite der Ringöffnung des Abstreifers und/oder der axiale Abstand der die Ringöffnung begrenzenden Abdichtringe beträgt dabei ein Mehrfaches der Maschenweite des Stützgitters, damit eventuelle Durchbiegungen des Filtergewebes zwischen den Stützstellen des Stützgitters durch die Begrenzungsränder oder die Abdichtringe überbrückt werden können.

Der automatische Steuerungsteil kann auch durch einen manuellen Steuerungsteil ersetzt werden, bei welchem der Rückspülvorgang mit Hilfe eines von außen betätigbaren Handrads durchgeführt wird.

Im folgenden wird die Erfindung anhand der in der Zeichnung schematisch dargestellten Ausführungsbeispiele näher erläutert. Es zeigen

Figur 1 ein Filtergerät mit automatisch betätigbarer Rückspülvorrichtung in senkrecht geschnittener Darstellung ;

Figur 2 ein Filtergerät mit manuell betätigbarer Rückspülvorrichtung in senkrecht geschnittener Darstellung ;

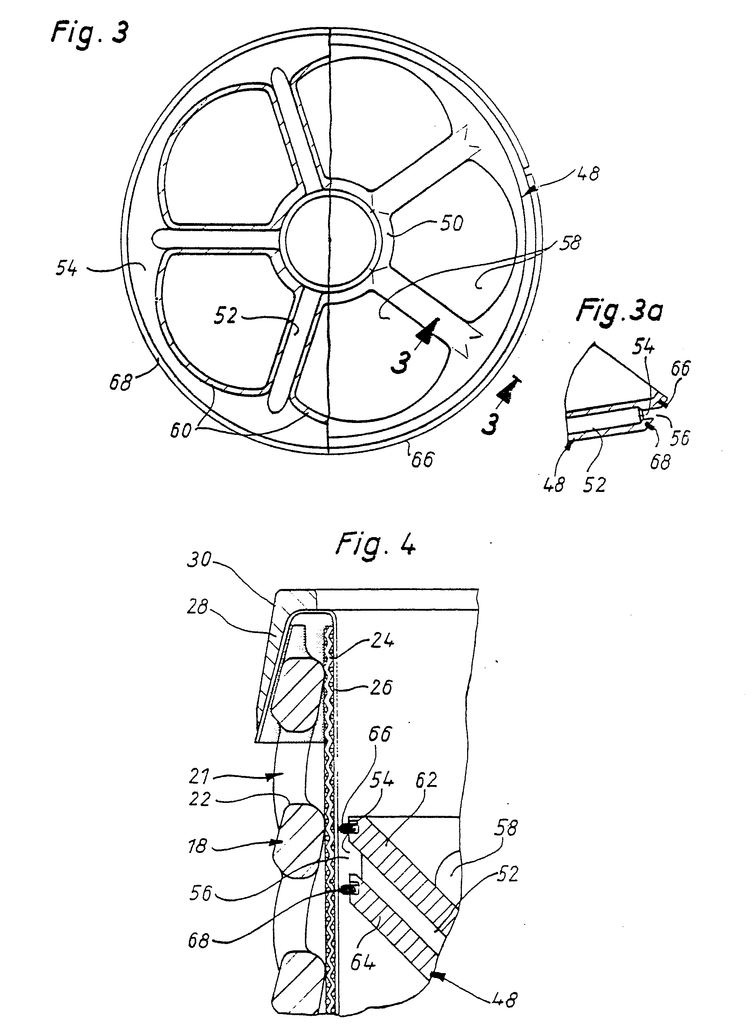

Figur 3 eine Draufsicht auf das Kanalstück der Rückspülvorrichtung nach Fig. 1 und 2 in vergrößerter Darstellung ;

Figur 3a einen Schnitt entlang der Schnittlinie 3-3 der Fig. 3 ;

Figur 4 einen Ausschnitt aus dem Filterelement mit Kanalstück in vergrößerter, senkrecht geschnittener Darstellung.

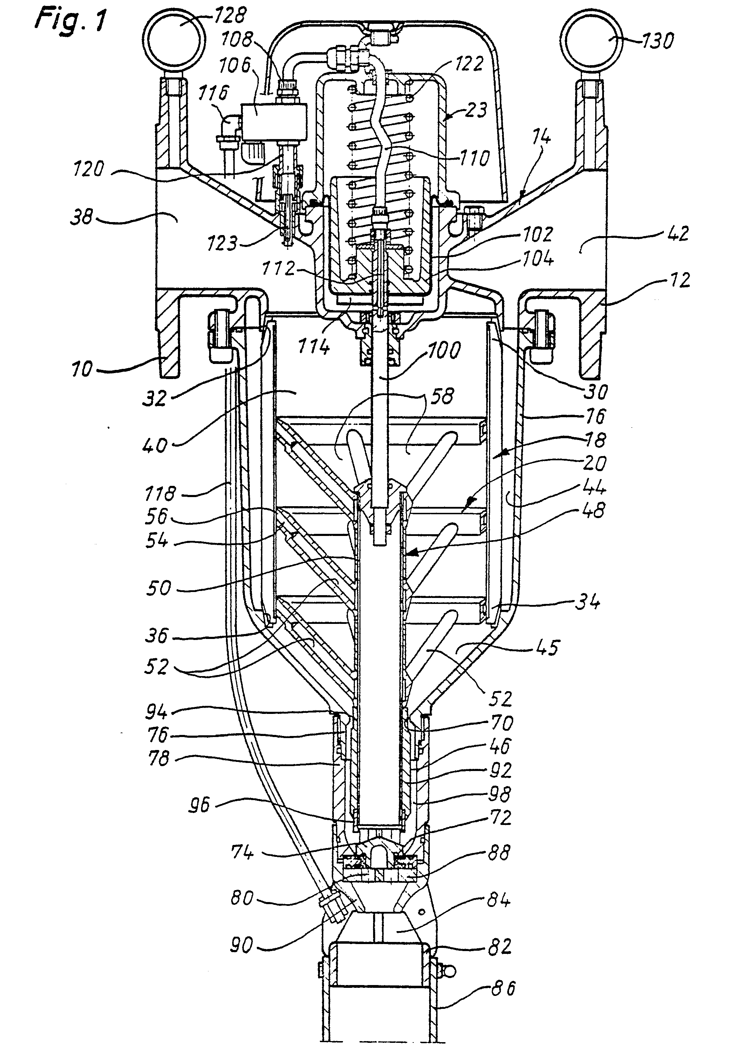

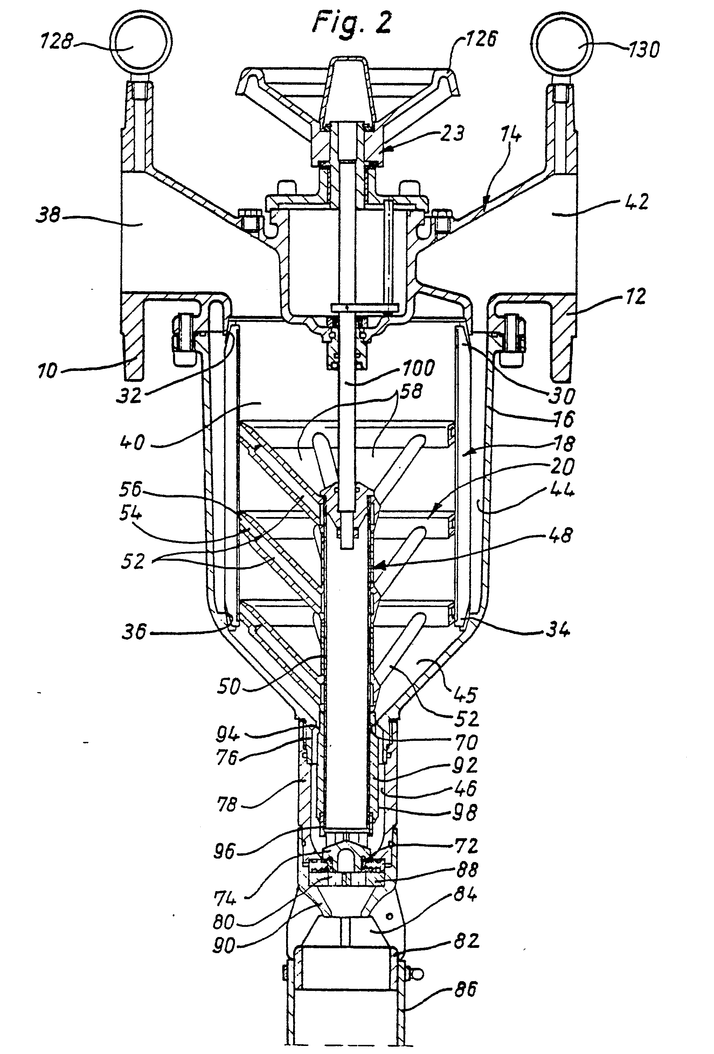

Die in der Zeichnung dargestellten Filtergeräte sind für den Anschluß an Wasserleitungen bestimmt und haben die Aufgabe, die Leitungen und die daran angeschlossenen Armaturen und Geräte vor Verunreinigungen zu schützen. Sie bestehen aus einem mit Rohranschlüssen 10, 12 versehenen Kopfteil 14, einer an der Unterseite des Kopfteils 14 angeflanschten Filtertasse 16, einem innerhalb der Filtertasse angeordneten hohlzylindrischen Filterelement 18 und einer innerhalb des Filterelements angeordneten Rückspülvorrichtung 20, die über eine im Kopfteil befindliche automatische (Fig. 1) oder manuelle (Fig. 2) Betätigungsvorrichtung auslösbar ist.

Das Filterelement 18 weist einen zylindrischen Tragkörper 21 mit relativ großen Durchbrüchen 22 auf, gegen dessen Innenfläche ein starres Stützgitter 24 aus einem kunststoffbeschichteten Metallgewebe anliegt. Über die Innenfläche des Stützgitters ist ein engmaschiges textiles Filtergewebe 26 gespannt, das am oberen und unteren Rand des Tragkörpers 21 nach außen gezogen und dort angeschweißt oder mit einer elastischen Gußmasse 28 angegossen ist. Das Stützgitter 24 bildet eine weitgehend glatte Anlagefläche für das Filtergewebe 26.

Das Filterelement ist mit seinem konischen oberen Ende 30 in eine zum Rohwassereinlaß (Rohflüssigkeitseinlaß) 38 führende Öffnung 32 des Kopfteils 14 eingesteckt und mit seinem gleichfalls konischen unteren Ende 34 auf einen ringförmigen Ansatz 36 der Filtertasse aufgesteckt und zwischen der Öffnung 32 und dem Ansatz 36 verkeilt. Durch das Filterelement 18 wird der Innenraum der Filtertasse 16 in zwei Kammern unterteilt, die mit dem Rohwassereinlaß 38 verbundene Rohwasserkammer (Rohflüssigkeitskammer) 40 im Inneren des Filterelements und die mit dem Reinwasserauslaß (Reinflüssigkeitsauslaß) 42 verbundene ringförmige Reinwasserkammer (Reinflüssigkeitskammer) 44 auf der Außenseite des Filterelements.

Während des Filtrierbetriebs tritt das ankommende Wasser durch den Rohwassereinlaß 38 in die Rohwasserkammer 40 ein, durchströmt das Filterelement 18 von innen nach außen und fließt gereinigt durch den Reinwasserauslaß 42 ab. Die im Rohwasser befindlichen Schwebeteilchen werden am Filtergewebe 26 zurückgehalten. Gröbere Teilchen sinken in der Filtertasse 16 nach unten und sammeln sich entweder im Raum 45 der Filtertasse oder in einer Rückspülkammer 46. Mit zunehmender Verschmutzung des Filterelements erhöht sich der Druckabfall im Gerät. Deshalb muß das Filterelement 18 von Zeit zu Zeit durch Rückspülen gereinigt werden. Hierzu dient die im Inneren des Filterelements 18 angeordnete Rückspülvorrichtung 20.

Die Rückspülvorrichtung 20 enthält ein relativ zum Filterelement 18 axial verschiebbares Kanalstück 48, das ein zentrales Rohr 50 und mehrere im Winkelabstand voneinander angeordnete, schräg nach oben weisende Verbindungskanäle 52 aufweist, die an ihrem äußeren Ende gruppenweise in drei in axialem Abstand voneinander angeordnete Ringkanäle 54 münden, die eine radial zum Filterelement 18 hin offene Ringöffnung 56 aufweisen. Die Verwendung mehrerer, im axialen Abstand voneinander angeordneter Ringkanäle 54 hat den Vorteil, daß die gesamte Höhe des Filterelements beim Rückspülvorgang mit verhältnismäßig kleinem Hub überstrichen werden kann. Die sternförmig angeordneten Verbindungskanäle 52 sind durch freie Zwischenräume 58 für den Durchtritt von Wasser und Schmutzteilchen voneinander getrennt. Die innere Begrenzungswand 60 des jeweiligen Ringkanals ist zu den Einmündungen der Verbindungskanäle 52 hin konvex gekrümmt, so daß das an der Ringöffnung 56 eintretende Rückspülwasser staufrei über die Verbindungskanäle 52 abfließen kann.

Beim Rückspülvorgang müssen die Ringkanäle 54 mit ihrer Öffnung 56 möglichst dicht gegen die rohwasserseitige Oberfläche des Filterelements 18 anliegen, damit nur Rückspülwasser von der Reinwasserkammer 44 durch das Filterelement 18 zur Ringöffnung 56 gelangen kann und der Zutritt von Rohwasser aus der Rohwasserkammer 40 vermieden wird. Dies läßt sich bei der glatten rohwasserseitigen Oberfläche des Filterelements 18 dadurch erreichen, daß die Begrenzungsränder 62, 64 der Ringöffnung 56 dicht gegen die Filteroberfläche anliegen. Um Toleranzen in diesem Bereich auszugleichen, sind an den beiden Begrenzungsrändern 62, 64 der Ringöffnung 56 radial überstehende, elastisch gegen die rohflüssigkeitsseitige Oberfläche des Filterelements 18 andrückbare Abdichtringe 66, 68 vorgesehen. Die Abdichtringe 66, 68 sind zweckmäßig als Spreizringe aus Metall ausgebildet, die in Umfangsnuten im Bereich der Begrenzungsränder 62, 64 eingesetzt sind. Grundsätzlich ist jedoch auch die Verwendung von Gummiringen möglich. Die beim axialen Verschieben des Kanalstücks 48 an der Filteroberfläche entlangschabenden Begrenzungsränder 62, 64 und Abdichtringe 66, 68 wirken zusätzlich als Abstreifer, die etwaigen Grobschmutz von der Filteroberfläche abschaben können.

Das Kanalstück 48 greift mit seinem nach unten weisenden Rohr 50 durch eine zentrische Öffnung 70 der Filtertasse 16 hindurch und weist am unteren Rohrende einen gegen einen Dichtsitz 72 andrückbaren Schließkörper 74 auf. Die Rückspülkammer 46 wird durch ein von unten auf einen Stutzen 76 der Filtertasse 16 aufgeschraubtes Rohrstück 78 gebildet und führt über die durch den Schließkörper 74 verschließbare Auslaßöffnung 80 zu einem von unten auf das Rohrstück 78 aufschraubbaren Abflußstutzen 82. Der Abflußstutzen 82 ist über eine Umfangsöffnung 84 mit Atmosphärendruck beaufschlagt, so daß ein ungewolltes Ansaugen von Schmutzwasser aus einem angeschlossenen Kanal 86 in das Filtergerät unmöglich ist. Eine im Bereich der Auslaßöffnung 80 in den Abflußstutzen 82 eingelegte Lochplatte 88 und ein trichterförmiger Ansatz 90 sorgen dafür, daß das durch die Auslaßöffnung 80 austretende Rückspülwasser weitgehend spritzfrei in den Abflußkanal 86 gelangt.

Der in die Rückspülkammer 46 eingreifende Teil 92 des Rohrs 50 weist in seinem oberen und unteren Bereich Ringstufen 94, 96 auf, durch die sowohl in dem dargestellten Schließzustand als auch bei vollständig nach oben verschobenem Kanalstück 48 grobe Schmutzpartikel aus der Rohwasserkammer 40 in die Rückspülkammer 46 und von dort zur Auslaßöffnung 80 gelangen können. Im Zwischenbereich 98 zwischen den oberen und unteren Ringstufen 94, 96 weist der Rohrteil 92 einen größeren Querschnitt auf, so daß er dicht in der durch einen Ringwulst gebildeten zentrischen Öffnung 70 der Filtertasse 16 geführt wird.

Das Kanalstück ist an seinem oberen Ende mit einem axial nach oben geführten Stößel 100 verbunden, über den es mit Hilfe der automatischen (Fig. 1) bzw. manuellen (Fig. 2) Betätigungsvorrichtung 23 axial verschiebbar ist.

Bei der in Fig. 1 gezeigten automatischen Betätigungsvorrichtung 23 ist das Stößelende an einem mit einer Rollmembran 102 überspannten Kolben 104 befestigt, dessen Kolbenfläche über das Steuerventil 106 wahlweise mit dem in der Rohwasserkammer 40 herrschenden Überdruck oder mit Atmosphärendruck beaufschlagbar ist. Zu diesem Zweck ist der eine Anschluß 108 des als Dreiwegeventil ausgebildeten Steuerventils 106 über das Wendelrohr 110 und eine Bohrung 112 im Ventilstößel 100 mit dem Inneren des Kolbenzylinders 114 verbunden. Je nach Stellung des Steuerventils 106 besteht somit über den Ventilanschluß 116 und den nach unten geführten Schlauch 118 eine Verbindung mit dem unter Atmosphärendruck stehenden Abflußkanal 86 oder über den Anschluß 120 und das Rückschlagventil 123 mit der Rohwasserkammer 40. In der in Fig. 1 gezeigten Betriebsstellung ist das Steuerventil auf den Anschluß 116 geschaltet, so daß der Kolben 104 und damit auch das Kanalstück 48 unter der Einwirkung der Druckfeder 122 in der nach unten verschobenen Stellung gehalten wird, in der die Auslaßöffnung 80 verschlossen ist.

Wird das Steuerventil 106 in seine Rückspülstellung gebracht, in der der Kolbenzylinder 114 über den Anschluß 120 mit Druckwasser aus der Rohwasserkammer 40 beaufschlagt wird, so wird der Kolben 104 entgegen der Kraft der Feder 122 unter Mitnahme des Kanalstücks 48 nach oben verschoben. Dabei hebt sich der Schließkörper 74 von seinem Dichtsitz 72 ab und gibt die Auslaßöffnung 80 frei. In der ersten Rückspülphase wird zunächst der sich im unteren Teil der Rückspülkammer 46 angesammelte Grobschmutz ausgespült. Beim weiteren Anheben des Kanalstücks 48 gelangt der erweiterte Abschnitt 98 des Rohrteils 92 in die zentrische Öffnung 70, so daß kein Druckausgleich zwischen der Rohwasserkanner 40 und der Rückspülkammer 46 mehr auftreten kann. In diesen Zwischenstellungen wird das Filterelement 18 an den augenblicklich von den Ringöffnungen 56 überstrichenen Stellen von der Reinwasserseite aus rückgespült, wobei das Rückspülwasser durch das Rohr 50 zur Ausflußöffnung 80 gelangt. Beim Hochfahren des Kanalstücks 48 werden zugleich grobere Schmutzteilchen durch die Begrenzungsränder 62 und die Abdichtringe 66 der Ringkanäle 54 von der glatten Filteroberfläche abgeschabt und gelangen durch die Zwischenräume 58 hindurch in den darunter befindlichen Raum 45 der Filtertasse 16. In der oberen Endstellung deckt sich die untere Ringstufe 96 des Rohrteils 92 mit der zentrischen Öffnung 70, so daß die sich im Raum 45 angesammelten Schmutzteilchen mit dem sodann nach unten strömenden Rohwasser zur Auslaßöffnung 80 gelangen können.

Wird das Steuerventil 106 nun wieder in die Betriebsstellung umgesteuert, in der der Kolbenzylinder 114 über den Anschluß 116 gegen Atmosphärendruck entlastet wird, so gelangt der Kolben 104 zusammen mit dem Kanalstück 48 unter der Einwirkung der Druckfeder 122 wieder in seine Ausgangslage zurück. Das im Kolbenzylinder 114 befindliche Wasser wird dabei über den Anschluß 116 des Steuerventils und den Schlauch 118 zum Abflußkanal 86 verdrängt. Die Drosselwirkung in den Verbindungskanälen gewährleistet dabei, daß der Kolben 104 langsam in seine Ausgangslage zurückverschoben wird. Hierbei wird die rohwasserseitige Oberfläche des Filterelements 18 ein zweites Mal überstrichen und vom Restschmutz gereinigt.

Während des Rückspülvorgangs kann der Filtrierbetrieb aufrechterhalten werden, da das Rohwasser durch die Zwischenräume 58 hindurch nach wie vor zu dem von den Ringöffnungen 56 nicht überstrichenen Bereichen des Filterelements 18 gelangen kann.

Bei dem in Fig. 2 gezeigten Ausführungsbeispiel eines Filtergeräts ist statt der automatisch betätigbaren Verschiebevorrichtung ein Handrad 126 vorgesehen, mit dem das Kanalstück über ein am Stößel angeordnetes Gewinde zum Zwecke der Rückspülung axial verschoben werden kann.

Der Wasserdruck im Bereich des Rohwassereinlasses 38 und des Reinwasserauslasses 42 kann anhand der beiden Manometer 128, 130 überwacht werden. Die sich bei gegebenem Durchfluß einstellende Druckdifferenz kann dabei als Maß für den Verschmutzungsgrad des Filterelements 18 und bei Überschreiten eines bestimmten Vorgabewerts für die Einleitung eines Rückspülvorgangs verwendet werden.

Der Rückspülzyklus kann auch automatisch, beispielsweise durch eine zeitabhängige Steuerung nach einer bestimmten Betriebsdauer im Filtrierbetrieb, durch eine druckabhängige Steuerung aufgrund einer Messung des Drucks bzw. der Druckdifferenz zwischen dem Rohwassereinlaß und dem Reinwasserauslaß oder über eine mengenabhängige Steuerung durch Messung der Durchflußmenge eingeleitet werden.

**Patentansprüche**

1. Rückspülbares Filtergerät für Flüssigkeiten, insbesondere Wasser, gekennzeichnet durch folgende Merkmale :

eine mit einem Rohflüssigkeitseinlaß (38) verbundene Rohflüssigkeitskammer (40) ist von einer mit einem Reinflüssigkeitsauslaß (42) verbundenen Reinflüssigkeitskammer (44) durch mindestens ein im wesentlichen hohlzylindrisches Filterelement (18) getrennt ;

auf der Rohflüssigkeitsseite ist eine mit einer verschließbaren Auslaßöffnung (80) versehene Rückspülkammer (46) angeordnet ;

innerhalb des Filterelements (18) ist ein mit mindestens einer schlitzförmigen Ringöffnung (56) axial über die rohflüssigkeitsseitige Oberfläche des Filterelements (18) verschiebbares, austrittsseitig zur Rückspülkammer (46) führendes Kanalstück (48) angeordnet ;

die Ringöffnung (56) ist am radial äußersten Rand eines Abstreifers (62, 64 ; 66, 68) angeordnet ;

das Filterelement weist in dem vom Abstreifer (62, 64 ; 66, 68) überstrichenen rohflüssigkeitsseitigen Bereich eine im wesentlichen glatte Oberfläche auf ;

das Kanalstück (48) trägt an seinem unteren, in die Rückspülkammer (46) eingreifenden Ende einen Schließkörper (74), der gegen einen Dichtsitz (72) im Bereich der Auslaßöffnung (80) andrückbar und beim axialen Verschieben des Kanalstücks (48) unter Freigabe der Auslaßöffnung (80) von diesem abhebbar ist ;

das Kanalstück (48) ist über einen Stößel (100) starr mit einem Kolben (104) verbunden, der in einem aus dem Flüssigkeitsdurchströmten Bereich des Filtergeräts ausgelagerten, über ein Steuerventil (106) wahlweise mit dem Überdruck aus einer der Flüssigkeitskammern (Rohflüssigkeitskammer 40) oder mit Atmosphärendruck beaufschlagbaren Kolbenzylinder (114) angeordnet ist ;

die Kolbenfläche ist mit einer flüssigkeitsdicht an der Zylinderwandung befestigten Rollmembran (102) überspannt.

2. Filtergerät nach Anspruch 1, dadurch gekennzeichnet, daß der Kolbenzylinder (114) über einen beim Verschieben des Kolbens zusammen- oder auseinanderschiebbaren gewendelten Schlauch (118) mit dem Steuerventil (106) verbunden ist.

3. Filtergerät nach Anspruch 1 oder 2, dadurch gekennzeichnet, daß der Kolben (104) mit Hilfe des Flüssigkeitsüberdrucks aus einer der Flüssigkeitskammern (Rohflüssigkeitskammer 40) entgegen der Kraft einer Feder (122) von einer Ausgangslage in eine Endlage verschiebbar und mit Hilfe der Federkraft entgegen dem im Kolbenzylinder (114) anstehenden Atmosphärendruck wieder in seine Ausgangslage zurückverschiebbar ist.

4. Filtergerät nach einem der Ansprüche 1 bis 3, dadurch gekennzeichnet, daß das als Dreiwegeventil ausgebildete Steuerventil (106) an seinem einen Anschluß mit dem Kolbenzylinder (114) und an seinem zweiten Anschluß über ein Rückschlagventil (123) mit einer der Flüssigkeitskammern (Rohflüssigkeitskammer 40) verbunden ist und mit seinem dritten Anschluß (116) mit Atmosphärendruck beaufschlagbar ist.

5. Filtergerät nach einem der Ansprüche 1 bis 4, dadurch gekennzeichnet, daß die Auslaßöffnung (80) der Rückspülkammer über einen trichterförmigen Ansatz (90) in einen Abflußstutzen (82) mündet, der über eine unmittelbar unterhalb des Ansatzes befindliche Umfangsöffnung (84) mit Atmosphärendruck beaufschlagt und an seinem freien Ende an einen Abflußkanal (86) anschließbar ist.

6. Rückspülbares Filtergerät für Flüssigkeiten, insbesondere nach einem der Ansprüche 1 bis 5, gekennzeichnet durch folgende Merkmale :

eine mit einem Rohflüssigkeitseinlaß (38) verbundene Rohflüssigkeitskammer (40) ist von einer mit einem Reinflüssigkeitsauslaß (42) verbundenen Reinflüssigkeitskammer (44) durch mindestens ein im wesentlichen hohlzylindrisches Filterelement (18) getrennt ;

auf der Rohflüssigkeitsseite ist eine mit einer verschließbaren Auslaßöffnung (80) versehene Rückspülkammer (46) angeordnet ;

innerhalb des Filterelements (18) ist ein mit mindestens einer schlitzförmigen Ringöffnung (56) axial über die rohflüssigkeitsseitige Oberfläche des Filterelements (18) verschiebbares, austrittsseitig zur Rückspülkammer (46) führendes Kanalstück (48) angeordnet ;

die Ringöffnung (56) ist am radial äußersten Rand eines Abstreifers (62, 64 ; 66, 68) angeordnet ;

das Filterelement weist in dem vom Abstreifer (62, 64 ; 66, 68) überstrichenen rohflüssigkeitsseitigen Bereich eine im wesentlichen glatte Oberfläche auf ;

das Filterelement (18) weist einen zylindrischen Tragkäfig (21) aus Kunststoff und ein den Tragkäfig rohflüssigkeitsseitig überspannendes biegeschlaffes Filtergewebe (26) auf ;

zwischen dem Tragkäfig (21) und dem Filtergewebe (26) ist ein biegesteifes Stützgitter (24) aus Metall- und/oder Kunststoff angeordnet, dessen Maschenweite um ein Mehrfaches kleiner als die des Tragkäfigs (21) und um ein Mehrfaches größer als die des Filtergewebes (26) ist ;

das Filtergewebe liegt flach auf dem Stützgitter (24) auf ;

die axiale Weite der Ringöffnung (56) beträgt ein Mehrfaches der Maschenweite des Stützgitters (26).

7. Filtergerät nach Anspruch 6, dadurch gekennzeichnet, daß der Tragkäfig (21) als Extrusionskörper mit ausgestanzten Mantelöffnungen oder Durchbrüchen (22) ausgebildet ist.

8. Filtergerät nach Anspruch 6 oder 7, dadurch gekennzeichnet, daß das Stützgitter (24) aus Edelstahldraht mit einer flüssigkeitsbeständigen, insbesondere trinkwasserbeständigen Kunststoffbeschichtung besteht.

9. Filtergerät nach einem der Ansprüche 1 bis 8, dadurch gekennzeichnet, daß der Abstreifer zwei über die Begrenzungsränder der Ringöffnung (56) überstehende, elastisch gegen die rohflüssigkeitsseitige Oberfläche des Filterelements andrückbare Abdichtringe (66, 68) aufweist.

10. Filtergerät nach Anspruch 9, dadurch gekennzeichnet, daß die elastischen Abdichtringe (66, 68) als in je einer Umfangsnut des Abstreifers angeordnete metallische Spreizringe oder Gummiringe ausgebildet sind.

11. Filtergerät nach einem der Ansprüche 1 bis 10, dadurch gekennzeichnet, daß der Abstreifer (62, 64 ; 66, 68) des Kanalstücks (48) eine sich konisch nach oben erweiternde Gestalt aufweist.

**Claims**

1. A back-washing filter assembly for fluids, especially water, characterised by having the following features :

a chamber (40) for untreated fluid connected to an inlet (38) for untreated fluid is separated by at least one essentially hollow cylindrical filter element (18) from a chamber (44) for purified fluid connected to an outlet (42) for purified fluid ;

a back-washing chamber (46) provided with a sealable outlet port (80) is disposed on the untreated fluid side ;

inside the filter element (18) is disposed a channel section (48) which is axially displaceable with at least one slot-shaped annular orifice (56) over the surface of the filter element (18) on the side facing the untreated fluid and which on the exit side leads to the back-washing chamber (46) ;

the annular orifice (56) is disposed on the radially outermost edge of a wiper (62, 64 ; 66, 68) ;

in the zone on the untreated fluid side which is swept by the wiper (62, 64 ; 66, 68) the filter element exhibits an essentially smooth surface ;

at its bottom end, which engages in the back-washing chamber (46), the channel section (48) carries a closing member (74) which can be pressed against a sealing fit (72) in the region of the outlet port (80) and can be raised from the channel section (48) to expose the outlet port (80) when said channel section is displaced axially ;

the channel section (48) is rigidly connected via a valve lifter (100) to a piston (104) disposed in a piston cylinder (114), which is displaced from the filter assembly zone through which fluid passes and can be subjected via a control valve (106) to the overpressure from one of the fluid chambers (chamber (40) for untreated fluid) or to atmospheric pressure, as required ;

a roll membrane (102) attached to the cylinder walling in a manner impervious to fluids is stretched over the piston surface.

2. The filter assembly as claimed in Claim 1, characterised in that the piston cylinder (114) is connected to the control valve (106) via a flexible tube (118) which can be coiled and uncoiled as the piston is displaced.

3. The filter assembly as claimed in Claim 1 or 2, characterised in that using the overpressure of the fluid from one of the fluid chambers (chamber (40) for untreated fluid), the piston (104) can be displaced against the force of a spring (122) from a starting position to an end position, and using the spring loading can be displaced back into its starting position against the atmospheric pressure prevailing in the piston cylinder (114).

4. The filter assembly as claimed in any of Claims 1 to 3, characterised in that the control valve (106), which is constructed as a three-way valve, is connected at one connector to the piston cylinder (114) and at its second connector via a back-pressure valve (123) to one of the fluid chambers (chamber (40) for untreated fluid), and at its third connector (116) can be subjected to atmospheric pressure.

5. The filter assembly as claimed in any of Claims 1 to 4, characterised in that the outlet port (80) of the back-washing chamber terminates in a discharge connection (82) reached via a funnel-shaped neck (90), said discharge connection being subjected to atmospheric pressure via a peripheral opening (84) situated directly below said neck, and its open end being connectable to a discharge channel (86).

6. A back-washing filter assembly for fluids, especially as claimed in any of Claims 1 to 5, characterised by having the following features :

a chamber (40) for untreated fluid connected to an inlet (38) for untreated fluid is separated by at least one essentially hollow cylindrical filter element (18) from a chamber (44) for purified fluid connected to an outlet (42) for purified fluid ;

a back-washing chamber (46) provided with a sealable outlet port (80) is disposed on the untreated fluid side ;

inside the filter element (18) is disposed a channel section (48) which is axially displaceable with at least one slot-shaped annular orifice (56) over the surface of the filter element (18) on the side facing the untreated fluid and which on the exit side leads to the back-washing chamber (46) ;

the annular orifice (56) is disposed on the radially outermost edge of a wiper (62, 64 ; 66, 68) ;

in the zone on the untreated fluid side which is swept by the wiper (62, 64 ; 66, 68) the filter element exhibits an essentially smooth surface ;

the filter element (18) exhibits a cylindrical supporting cage (21) made of plastic and a non-rigid filter fabric (26) stretched over said supporting cage on the side facing the untreated fluid ;

between the supporting cage (21) and the filter fabric (26) is disposed a rigid stiffening grid (24) of metal and/or plastic, whose mesh size is several times smaller than that of the supporting cage (21) and several times larger than that of the filter fabric (26) ;

the filter fabric lies flat against the stiffening grid (24) ;

the axial clearance of the annular orifice (56) is several times the mesh size of the stiffening grid (26).

7. The filter assembly as claimed in Claim 6, characterised in that the supporting cage (21) is an extruded part having punched surface openings or perforations (22).

8. The filter assembly as claimed in Claim 6 or 7, characterised in that the stiffening grid (24) consists of special steel wire with a plastic coating which is resistant to fluids, especially drinking water.

9. The filter assembly as claimed in any of Claims 1 to 8, characterised in that the wiper exhibits two packing rings (66, 68) which are proud of the limiting edges of the annular orifice (56) and can be pressed elastically against the surface of the filter element on the untreated fluid side.

10. The filter assembly as claimed in Claim 9, characterised in that the elastic packing rings (66, 68) are metal expansion rings or rubber rings disposed in each peripheral groove of the wiper.

11. The filter assembly as claimed in any of Claims 1 to 10, characterised in that the wiper (62, 64 ; 66, 68) of the channel section (48) expands conically upwards in form.

**Revendications**

1. Installation de filtration se rinçant à contre-courant, caractérisée :

en ce qu'un compartiment de liquide brut (40), relié à une arrivée de liquide brut (38), est séparé d'un compartiment de liquide propre (44), raccordé à une sortie de liquide propre (42), par un élément filtrant au moins (18), essentiellement cylindrique et creux,

en ce qu'un compartiment de rétrolavage (46), muni d'un orifice de sortie obturable (80), est disposé sur le côté liquide brut,

en ce qu'une section de conduit (48) interne à l'élément filtrant (18), munie d'une ouverture annulaire au moins (56) en forme de fente, est dotée d'une possibilité de déplacement axial sur la surface côté liquide brut de l'élément filtrant (18) et débouche côté sortie dans le compartiment de rétrolavage (46),

en ce que l'ouverture annulaire (56) est disposée sur le bord radial externe d'un racleur (62, 64 ; 66, 68),

en ce que l'élément filtrant présente une surface essentiellement lisse, dans la zone côté liquide brut balayée par le racleur (62, 64 ; 66, 68),

en ce que l'extrémité inférieure de la section de conduit (48), qui s'engage dans le compartiment de rétrolavage (46), supporte un corps de fermeture (74) qui peut s'appuyer contre un siège (72), prévu dans la zone de l'orifice de sortie (80), et se décoller de ce siège avec le déplacement axial de la section de conduit (48), en dégageant l'orifice précité (80),

en ce que la section de conduit (48) est reliée par un poussoir (100) à un piston (104), qui est monté dans un cylindre (114), externe à la zone parcourue par le liquide de l'installation de filtration et qu'une vanne pilote (106) permet de soumettre à la pression effective de l'un des compartiments de liquide (compartiment de liquide brut 40) ou à la pression atmosphérique,

en ce que la surface du piston est enveloppée par une membrane (102), hermétiquement fixée sur la paroi du cylindre.

2. Installation de filtration suivant la revendication 1, caractérisée en ce que le cylindre (114) est relié à la vanne pilote (106) par l'intermédiaire d'un flexible en spirale (110), replié ou tiré avec le déplacement du piston.

3. Installation de filtration suivant l'une des revendications 1 et 2, caractérisée en ce que le piston (104) peut se déplacer d'une position initiale dans une position finale, contre la force d'un ressort (122), sous l'effet de la pression effective de l'un des compartiments de liquide (compartiment de liquide brut 40), et peut revenir dans sa position initiale sous l'effet de la force du ressort, contre la pression atmosphérique qui règne dans le cylindre (114).

4. Installation de filtration suivant l'une quelconque des revendications 1 à 3, caractérisée en ce que la vanne pilote (106), représentée par une vanne à trois voies, est reliée par son premier raccordement au cylindre (114), par son deuxième raccordement à l'un des compartiments de liquide (compartiment de liquide brut 40), par l'intermédiaire d'un clapet de non-retour (123), et peut être soumise à la pression atmosphérique par son troisième raccordement (116).

5. Installation de filtration suivant l'une quelconque des revendications 1 à 4, caractérisée en ce que l'orifice de sortie (80) du compartiment de rétrolavage débouche, par l'intermédiaire d'un prolongement en forme d'entonnoir (90), dans une tubulure d'évacuation (82) qu'une ouverture périphérique (84), directement sous-jacente au prolongement, permet de soumettre à la pression atmosphérique, et dont l'extrémité libre peut être raccordée à un conduit d'évacuation (86).

6. Installation de filtration se rinçant à contre-courant pour des liquides, suivant l'une quelconque des revendications 1 à 5 notamment, caractérisée :

en ce qu'un compartiment de liquide brut (40), relié à une arrivée de liquide brut (38), est séparé d'un compartiment de liquide propre (44), raccordé à une sortie de liquide propre (42), par un élément filtrant au moins (18), essentiellement cylindrique et creux,

en ce qu'un compartiment de rétrolavage (46), muni d'un orifice de sortie obturable (80), est disposé sur le côté liquide brut,

en ce qu'une section de conduit (48) interne à l'élément filtrant (18), munie d'une ouverture annulaire au moins (56) en forme de fente, est dotée d'une possibilité de déplacement axial sur la surface côté liquide brut de l'élément filtrant (18) et débouche côté sortie dans le compartiment de rétrolavage (46),

en ce que l'ouverture annulaire (56) est disposée sur le bord radial externe d'un racleur (62, 64 ; 66, 68),

en ce que l'élément filtrant présente une surface essentiellement lisse, dans la zone côté liquide brut balayée par le racleur (62, 64 ; 66, 68),

en ce que l'élément filtrant (18) présente une cage support (21) cylindrique, réalisée en plastique, ainsi qu'un tissu filtrant (26) flexible, tendu côté liquide brut sur la cage précitée,

en ce qu'une grille d'appui (24) résistante à la flexion, réalisée en métal et/ou en plastique et disposée entre la cage support (21) et le tissu filtrant (26), présente une ouverture de maille inférieure d'un multiple à celle de la cage (21) et supérieure d'un multiple à celle du tissu filtrant (26),

en ce que le tissu filtrant repose à plat sur la grille d'appui (24),

en ce que la largeur axiale de l'ouverture annulaire (56) est égale à un multiple de l'ouverture de maille de la grille d'appui (26).

7. Installation de filtration suivant la revendication 6, caractérisée en ce que la cage support (21) est représentée par un corps extrudé, doté d'orifices périphériques découpés ou d'ouvertures (22).

8. Installation de filtration suivant l'une des revendications 6 et 7, caractérisée en ce que la grille d'appui (24) est en fil d'acier spécial, revêtu d'un plastique résistant aux liquides, à l'eau potable notamment.

9. Installation de filtration suivant l'une quelconque des revendications 1 à 8, caractérisée en ce que le racleur présente deux bagues d'étanchéité élastiques (66, 68), compressibles sur la surface côté liquide brut de l'élément filtrant et disposées en saillie par rapport aux bords limites de l'ouverture annulaire (56).

10. Installation de filtration suivant la revendication 9, caractérisée en ce que les bagues d'étanchéité élastiques (66, 68) sont représentées par des anneaux d'écartement métalliques ou par des bagues de caoutchouc, respectivement disposés dans une rainure périphérique du racleur.

11. Installation de filtration suivant l'une quelconque des revendications 1 à 10, caractérisée en ce que le racleur (62, 64 ; 62, 68) de la section de conduit (48) présente une forme qui s'élargit en cône vers le haut.

Fig. 1
128
130
108
106
116
122
23
110
14
120
38
123
102
42
104
112
12
114
100
10
32
30
58
40
16
18
20
118
44
56
48
54
50
34
36
45
52
52
94
70
76
46
78
92
98
96
72
74
88
80
84
90
82
86

Fig. 2
128
126
130
23
14
38
42
12
10
100
32
30
58
40
16
18
20
56
44
54
48
52
36
34
50
45
52
94
70
76
92
78
46
98
96
72
74
88
84
80
90
82
86

Fig. 3
48
50
58
54
52
68
60
66
3
3
Fig.3a
54
66
56
68
48
52

Fig. 4
30
28
24
26
66
21
54
62
22
58
18
52
56
68
64
48